Europäisches Patentamt

European Patent Office

Office européen des brevets

(19)

(11) EP 0 884 620 A2

(12) EUROPEAN PATENT APPLICATION

(43) Date of publication:
16.12.1998 Bulletin 1998/51

(51) Int. Cl.⁶: **G02F 1/1335**

(21) Application number: 98110464.9

(22) Date of filing: 08.06.1998

(84) Designated Contracting States:
**AT BE CH CY DE DK ES FI FR GB GR IE IT LI LU MC NL PT SE**
Designated Extension States:
**AL LT LV MK RO SI**

(30) Priority: **09.06.1997 JP 167995/97**

(71) Applicant:
**NITTO DENKO CORPORATION Osaka (JP)**

(72) Inventors:
• **Kameyama, Tadayuki Ibaraki-shi, Osaka (JP)**

• **Takahashi, Naoki Ibaraki-shi, Osaka (JP)**
• **Motomura, Hironori Ibaraki-shi, Osaka (JP)**
• **Mihara, Hisashi Ibaraki-shi, Osaka (JP)**

(74) Representative:
**Grünecker, Kinkeldey, Stockmair & Schwanhäusser Anwaltssozietät Maximilianstrasse 58 80538 München (DE)**

(54) **Liquid crystal display**

(57) A liquid crystal display comprising a transmission-type liquid crystal cell having a polarizer (3) via an uneven scattering layer (31) having a haze value of from 1.5 to 15% and a 60 degree gloss value of from 35 to 85%, and, if necessary, having a polarization separating plate (6) and a 1/4 wavelength plate (5).

The liquid crystal display can easily improve color temperature at a white display in an in-plane direction without accompanied by the increase of the consumed electric power and lowering an in-plane luminance, or can easily improve the in-plane luminance without accompanied by the increase of the consumed electric power and the change of the color temperature in the white display at the in-plane direction.

*FIG. 1*

**Description**

FIELD OF THE INVENTION

The present invention relates to a transmission type liquid crystal display.

BACKGROUND OF THE INVENTION

Hitherto, there has been a problem of accompanying the increase of a consumed electric power in controlling color temperature of a white display in a liquid crystal display constituted by successively placing a polarizer and a light pipe type light source on one side of a liquid crystal cell, and if necessary, incorporated with a color filter, a diffusion plate, a prism sheet, etc., to a desired value by controlling the color temperature of a light source.

Where the color temperature of a light source is increased while keeping a consumed electric power constant, there has been a problem that luminance in the front direction of the liquid crystal display is lowered and it is difficult to simultaneously improve the color temperature and the luminance. The color temperature can be also improved by the change of design of the polarizer and a light pipe, the color filter and the diffusion plate, or the transmittance of the prism sheet, etc., but the change of design requires many trial and errors, and the above-described system of improving the color temperature of the light source has the advantage that the design can be most simply changed.

SUMMARY OF THE INVENTION

An object of the present invention is to provide a liquid crystal display capable of easily improving the color temperature in the white display at the front direction without accompanied by the increase of the consumed electric power and lowering the front luminance or a liquid crystal display capable of easily improving the front luminance without the increase of the consumed electric power and the change of the color temperature in the white display at the front direction.

According to the present invention, there is provided a liquid crystal display comprising a transmission type liquid crystal cell having on a light source disposed side thereof a polarizer via an uneven scattering layer having a haze value of from 1.5 to 15% and a 60 degree gloss value of from 35 to 85% and further, if necessary, having a polarized separated plate and a 1/4 wavelength plate.

BRIEF DESCRIPTION OF THE DRAWINGS

Fig. 1 is a cross-sectional view showing one embodiment of the liquid crystal display of the present invention; and
Fig. 2 is a cross-sectional view showing another embodiment of the liquid crystal display of the present invention.

DETAILED DESCRIPTION OF THE INVENTION

The present invention is described in detail below.

In the liquid crystal display of the present invention, the uneven scattering layer is disposed between the liquid crystal cell and the polarizer, the reflected light via a metal electrode in the liquid crystal cell is scatteringly reflected and a part of them can enter again the inside of the crystal cell and is transmitted, without lowering the transmittance of the incident light from a light source such as a back light, etc., in the front direction and thus without lowering the front luminance.

That is, a metal electrode is wired in the liquid crystal cell and the portion of wiring reflects the light entered the inside of the cell to interrupt the transmittance of the light. Accordingly, when, for example, aperture ratio capable of transmitting the cell incident light other than the metal electrode portion is 70%, the light transmitted through the polarizer from the light source enters the liquid crystal cell, 70% of the incident light transmits the cell, and remaining 30% of the light is reflected by the metal electrode, etc., and returns to the backlight side. However, when the returned light reaches the uneven scattering layer, the light is Rayleigh-scattered and a part of them enters again the inside of the cell and transmits the cell.

As a result, a part of the reflected light by the metal electrode, etc., can effectively be utilized, and thus the color temperature in the white display in the front direction can be improved by a method of easily improving the color temperature of the light source in the liquid crystal display without the increase of the consumed electric power and the decrease of the front luminance.

Further, when the incident light from the light source through a polarized separated plate is supplied to the polarizer as a polarized light, the quantity of light absorbed by the polarizer can be reduced to increase the quantity of the transmitted light, whereby the utilization efficiency of the incident light from the light source can be further improved. Moreover, the existence of the uneven scattering layer can prevent the occurrence of a sticking phenomenon of the liquid crystal cell and the polarizer. Such sticking is liable to become the cause of lowering the display quality by the formations of stains and a color unevenness.

As described above, the liquid crystal display of the present invention comprises a transmission liquid crystal cell having on the light source disposed side thereof a polarizer via an uneven scattering layer having a haze value of from 1.5 to 15% and a 60 degree gloss value of from 35 to 85%, and having, if necessary, a polarized separated plate and a 1/4 wavelength plate.

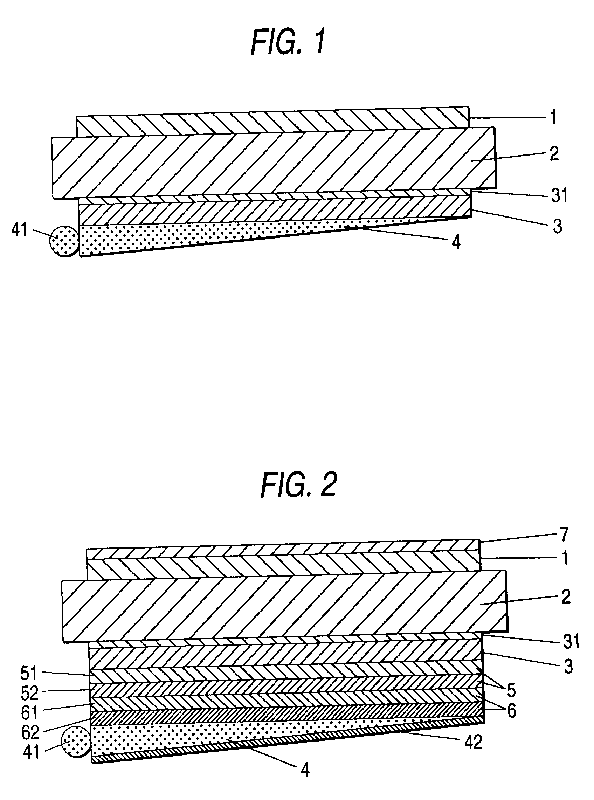

Fig. 1 and Fig. 2 show the embodiments of the liquid crystal display of the present invention respectively. In these drawings, 2 is a transmission-type liquid crystal cell, 3 is a polarizer at a light source disposed side of the liquid crystal cell, 31 is an uneven scattering layer, 1 is a polarizer at viewing side, 4 is a light pipe, 5 is a 1/4 wavelength plate, and 6 is a polarized separated plate.

In the liquid crystal display of the present invention shown in Fig. 1, the incident light from a light source 41 disposed at the side surface thereof passes through the light pipe 4, and is projected from the upper surface thereof via the bottom surface, etc. The projected light is linearly polarized via the polarizer, and transmits (initially) successively through the liquid crystal cell 2 and the polarizer 1 at the viewing side. At the same time, when returned light reflected by a metal electrode, etc., in the liquid crystal cell reaches the uneven scattering layer 31, the light is Rayleigh-scattered, a part of them enters again the liquid crystal cell, and the light is added to the above-described initially transmitted light to achieve the desired display. Rayleigh scattering shows the tendency that a short wavelength light is more effectively utilized than a long wavelength light.

From the points of not lowering the front transmittance of the light from the light source and scattering the reflected light by the metal electrode in the inside of the liquid crystal cell, the uneven scattering layer in the present invention has a haze value of from 1.5 to 15%, and preferably from 2 to 10%, and a 60 degree gloss value, that is, the gloss value showing the positive reflectance of 60 degree, of from 35 to 85%, and preferably from 45 to 75%.

From the points of the above-described front transmittance and the effective utilization of the reflected light, etc., in the more preferred uneven scattering layer, the center line average roughness of the surface is from 0.1 to 0.5 $\mu$m, and preferably from 0.2 to 0.4 $\mu$m, the 10 points average roughness is from 1.2 to 4.5 $\mu$m, and preferably from 2 to 3.5 $\mu$m, and the average peak-valley interval is from 50 to 200 $\mu$m, and preferably from 80 to 150 $\mu$m.

The uneven scattering layer is disposed between the liquid crystal cell 2 and the polarizer 3 at the light source side. The uneven scattering layer may be formed as a layer 3 such as a transparent protective layer, etc., attached to the polarizer in an integrated body with the polarizer, may be formed in surface roughened film different from the polarizer, or can be formed in the form of an appropriate layer.

The above-described layer attached to the polarizer can be formed by scattering and fixing fine particles onto the polarizer or by a system of attaching a transparent protective layer by coating a resin liquid containing fine particles on the polarizer. Further, the surface roughened film can be formed by, for example, a system of scattering and fixing fine particles onto a film or coating a resin liquid containing fine particles on a film, and a system of forming a film having a fine uneven structure on one surface or both the surfaces thereof by forming the film with a resin liquid containing fine particles. Accordingly, the surface roughening film can be formed by a method similar to an antiglare treatment applied for the purpose of preventing glare at the viewing side.

Inorganic fine particles, which may have an electro-conductive property, such as silica, alumina, titania, zirconia, tin oxide, indium oxide, cadmium oxide or antimony oxide, having an average particle size of 0.01 to 50 $\mu$m, preferably 0.1 to 20 $\mu$m, and more preferably 0.2 to 10 $\mu$m, or organic fine particles such as crosslinked or uncrosslinked polymers can be properly used, as the fine particles.

From the point of preventing the change of the polarized state of the linear polarized light via the polarizer as small as possible, the uneven scattering layer is that the retardation thereof is preferably as small as possible as in, for example, a coated layer, an unoriented film or a triacetate film which has a small birefringence even by being oriented. In particular, the retardation is preferably 50 nm or less, and more preferably 30 nm or less. The thickness of the uneven scattering layer may be properly determined and is generally 300 $\mu$m or less, preferably 1 to 100 $\mu$m, and more preferably 3 to 50 $\mu$m.

There is no particular restriction on the polarizer and a proper polarizer may be used. However, a polarizer composed of a polarizing film is generally used. Examples thereof include a hydrophilic high molecular film, such as a polyvinyl alcohol film, a partially formalated polyvinyl alcohol film or an ethylene-vinyl acetate copolymer partially saponified film, which is adsorbed with iodine and/or a dichroic dye followed by stretching, a polyene oriented film such as a dehydrated film of a polyvinyl alcohol film, or a dehydrochloric acid treated film of a polyvinyl chloride film, and the like.

In particular, the hydrophilic high molecular film adsorbed with iodine and/or a dichroic dye can be preferably used from the point of, for example, the degree of polarization. The thickness of the polarizing film is usually 5 to 80 $\mu$m although the thickness is not limited to the range. The polarizer used may comprise a polarizing film, one surface or both surfaces of which being coated with a transparent protective layer, or the like.

The liquid crystal display of the present invention may, if necessary, further have a polarized separated plate 6 via a polarizer 3 at the light source disposed side of the liquid crystal cell as shown in Fig. 2. The liquid crystal display may also further have a 1/4 wavelength plate 5 between the polarizer 3 and the polarized separated plate 6.

According to the liquid crystal display of the present invention shown in the drawing, the polarized separated plate comprises a cholesteric liquid crystal layer, the definite circularly polarized light in the light projected from the upper surface of the light pipe 4 transmits through the polarized separated plate 6, and other circularly polarized light than the definite circularly polarized light is reflected by the polarized separated plate 6. The reflected light enters again the light pipe 4, is reflected via the reflective layer 42 at the bottom surface and enters again the polarized separated plate 6 as a returned light.

The polarized state of the reflected light at the polarized separated plate 6 is changed when it is reflected at the bottom surface of the light pipe, and a part or the whole of the reflected light becomes a definite circularly polarized light which can transmit the polarized separated plate. Accordingly, the reflected light by the polarized separated plate is confined between the polarized separated plate and the light pipe until the reflected light becomes the definite circularly polarized light capable of transmitting the polarized separated plate, and the light repeats the reflection therebetween. The circularly polarized light transmitted and projected from the polarized separated plate achieves the purpose of display as in the liquid crystal display shown in Fig. 1.

The reflected light confined between the polarized separated plate and the reflecting layer of the light pipe is converted to the definite circularly polarized light while repeating the reflection between them to become the state capable of transmitting the polarized separated plate, and the definite circularly polarized light thus converted is projected together with the circularly polarized light in the incident light, which is in the definite state from the first, whereby the unutilized component of the light by the reflection loss is decreased and the utilization efficiency of light can be improved.

On the other hand, when the 1/4 wavelength plate 5 is placed on the polarized separated plate 6 as shown in Fig. 2, the circularly polarized light projected from the polarized separated plate enters the 1/4 wavelength plate to receive a phase change, the light of the wavelength that the retardation corresponds to the 1/4 wavelength is converted into a linearly polarized light, and the light of other wavelength is converted to an elliptically polarized light. The elliptically polarized light becomes a flatter elliptically polarized light as the wavelength thereof is nearer the wavelength of the light converted into the linearly polarized light. As a result, the light of the state containing many linearly polarized components capable of transmitting through the polarizer 3 via the 1/4 wavelength plate is formed, and projected from the uneven scattering layer 31 via the polarizer, thereby achieving the purpose of display as in the liquid crystal display shown in Fig. 1.

Accordingly, when projecting the circularly polarized light from the polarized separated plate, the circularly polarized light is converted into the state containing many linearly polarized light component via the 1/4 wavelength plate. By disposing the polarizer, the transmitting axis coincides with the linearly polarized direction, so that the absorption by the polarizer can be prevented, and the unutilized component of light by the absorption loss is reduced. As a result, the utilization efficiency of light can be improved.

The present invention can use, as the polarized separated plate, a proper plate capable of separating a polarized light to the polarized light in a definite state and to the polarized state in other state via a transmission and a reflection. The polarized light to be separated may be a light in an optional polarized state such as a circularly polarized light, a linearly polarized light, etc. When natural light, etc., is separated into left and right circularly polarized lights, cholesteric liquid crystal layer having the characteristics showing a less change of the optical characteristics to the change of a viewing angle is generally preferably used from the point of obtaining a transmission-type liquid crystal display excellent in the wide viewing angle.

There is no particular restriction on the cholesteric liquid crystal, and a proper liquid crystal can be used. However, from the points of the multilayer efficiency, decreased thickness, etc., of the liquid crystal layers, the use of a liquid crystal polymer is useful. Also, a cholesteric liquid crystal molecule having a larger birefringence is preferred because in this case, the wavelength region of a selective reflection becomes broader. The polarized separated plate composing a cholesteric liquid crystal layer, which can preferably used in the present invention, includes the film of a liquid crystal polymer showing a cholesteric phase, a transparent substrate such as a transparent film having formed thereon a cholesteric liquid crystal polymer layer, etc.

Examples of the liquid crystal polymer include a main chain-type liquid crystal polymer such as polyester, a side chain-type liquid crystal polymer made up of an acryl main chain or a methacryl main chain, a cyloxane main chain, a nematic liquid crystal polymer containing a low molecular chiral agent, a liquid crystal polymer having introduced therein a chiral component, and a mixed liquid crystal polymer of a nematic series liquid crystal and a cholesteric series liquid crystal. From the point of easily handing property, a liquid crystal polymer having a glass transition temperature of 30 to 150°C can be preferably used.

The cholesteric liquid crystal layer can be formed by a method according to a conventional orientation treatment method. For example, there are a method of forming a membrane of polyimide, polyvinyl alcohol, etc., on a substrate and applying thereto a rubbing treatment with a rayon cloth, and a method of spreading a liquid crystal polymer on a proper oriented membrane comprising a slant vapor-deposited layer of $SiO_2$, etc., heating the spread membrane to a temperature of from the glass transition temperature to the isotropic transition temperature, and cooling the membrane in the state that the liquid crystal polymer is grandjean oriented to a temperature of lower than the glass transition temperature to form a glass state, whereby a solid layer wherein said orientation is fixed is formed.

A proper substrate, for example, a film comprising a plastic such as triacetyl cellulose, polyvinyl alcohol, polyimide, polyarylate, polyester, polycarbonate, polysulfone, polyether polysulfone or an epoxy resin, or a glass plate, can be used as the substrate. When the substrate comprises a film, the solidified layer of a liquid crystal polymer formed on the substrate can be used as the polarized separated plate as an integrated body with the substrate, or is released from the substrate and can be used as the polarized separated plate comprising the solidified layer of the liquid crystal polymer. In forming the integrated body of the solidified layer of the liquid crystal polymer with the substrate comprising a film, it is preferred to use the film having the retardation as small as possible from the point of the prevention property of the change of the state of the polarized light.

Spreading the liquid polymer can be carried out by a heat-melting system or by spreading a solution of the liquid crystal polymer in a solvent. An appropriate organic solvent such as methylene chloride, cyclohexanone, tetrachloroethane, N-methylpyrrolidone or tetrahydrofuran can be used as the solvent. The spreading can be carried out by a proper coating means such as a bar coater, a spinner, a roll coater or a gravure printing method. In spreading, if necessary, a multilayer forming system of cholesteric liquid crystal layers via an oriented layer can be used.

The thickness of the cholesteric liquid crystal layer is 0.5 to 100 $\mu$m, preferably 1 to 70 $\mu$m, and more preferably 1 to 50 $\mu$m, from the points of preventing the occurrence of disturbance of the orientation and lowering of the transmittance, the selective reflecting property (the wavelength region showing a circularly polarizing dichroic property), etc. It is preferred that the polarized separated plate formed is formed as a flat layer from the point of making uniform the separation performance including a slant incident light. Also when the cholesteric liquid crystal layer is formed as two or more multilayers, it is preferred that each layer is flat. In addition, in forming the cholesteric liquid crystal layer or the polarized separated plate, if necessary, various additives such stabilizers, plasticizers, metals, etc., can be compounded therewith.

The polarized separated plate comprising the cholesteric layer can be formed as multilayers having two or more cholesteric liquid crystal layers 61 and 62 as shown in Fig. 2. The formation of multilayers is useful from the point of coping with broadening the wavelength region of the separation performance and shifting the wavelength of the slant incident light. In this case, it is preferred to form the multilayers as a combination of different central wavelengths of the reflected light as the polarized light other than the definite polarized light. That is, in a cholesteric liquid crystal layer of a single layer, usually there is a limit in the wavelength region showing the selective reflective property (circularly polarizing dichroism) and there is a case that the limit is a wide range extending a wavelength region of about 100 nm. However, when the cholesteric liquid crystal layer is applied to the liquid crystal display, etc., even the wide wavelength range does not extent to the whole visible light range desired. In such a case, by forming multilayers of the cholesteric liquid crystal layers each having a different selective reflective property, the wavelength region showing the circularly polarized dichroism can be expanded.

For example, in the case of the cholesteric liquid crystal layer, by forming multilayers of from 2 to 6 kinds using a combination of reflecting polarized lights of the same polarization direction having the central wavelengths of the selective reflections of from 300 to 900 nm based on the liquid crystal layers and also a combination of different central wavelengths of the selective reflections, and in particular, 50 nm or more different, the polarized separated plate which can cover a wide wavelength region can be formed. To form the multilayers of the cholesteric liquid crystal layers, the use of a liquid crystal polymer is particularly useful from the point of the production efficiency and thinning the layer(s).

Accordingly, as the polarized separated plate comprising the cholesteric liquid crystal layer(s), the polarized separated plate that the wavelength region of the light capable of being reflected therefrom as circularly polarized light other than the definite circularly polarized light coincides with the wavelength region of the light source such as the incident light based on the light pipe as completely as possible can be preferably used. When the light from the light source contains the main wavelengths such as bright line spectra, it becomes the next preferred embodiment to coincide the wavelength(s) of the reflected light based on the cholesteric liquid crystal phase, etc., with the main wavelength(s) of 1 kind or 2 or more kinds of them from the efficiency of the polarized separation. Also it is useful for thinning the polarized separated plate by reducing the necessary number of the multilayers. In this case, it is preferred that the extent of the coincidence of the wavelength(s) of the reflected light is in the range of within 20 nm to each of 1 kind or 2 or more kinds of the main wavelengths of the light source.

In the above embodiment, when using the cholesteric liquid crystal layer as the multilayer-type polarized separated plate, it was indicated to use the combination of the cholesteric liquid crystal layers each reflecting polarized light of the same polarization direction. This aims at the increase of the polarized light in the utilizable state by making uniform the phase states of the polarized lights reflected at the layers to prevent the polarized lights from becoming different polarized states in each wavelength region. In addition, as described above, proper one may be used as the cholesteric liquid crystal, but the cholesteric liquid crystal molecule having a larger retardation has a wider wavelength region of the selective reflection and can be preferably used from the points of reducing the layer number and the space for the wavelength shift at a large viewing angle.

The polarized separated plate comprising the cholesteric liquid crystal layer used in the present invention can be a proper form such as a cell form of holding the cholesteric liquid crystal layer comprising a low molecular weight material with a transparent substrate such as a transparent film, a form of supporting the cholesteric liquid crystal layer by a transparent substrate, or a form of multilayers by properly combining these forms. In this case, the cholesteric liquid crystal layer can be supported by the support of 1 layer or 2 or more layers according to the strength thereof, the operative property, etc. When using the support of 2 or more layers, it can be preferably used, for example, an unoriented film or a film having a small retardation, such as a triacetate film, which shows a small birefringence even when it is oriented.

On the other hand, the polarized separated plate, etc., separating a linearly polarized light can be used in the present invention as described above. As the practical examples thereof, there are the polarized separated plates described in JP-A-4-268505 (the term "JP-A" as used herein means an "unexamined published Japanese patent application) and PCT No. 95/17691. The using method of the polarized separated plate separating the linearly polarized light can be carried out according to the case of using the polarized separated plate comprising the cholesteric liquid crystal layer.

The 1/4 wavelength plate, if necessary, disposed at the upper portion of the polarized separated plate separating the circularly polarized light aims at changing the phase of the circularly polarized light projected from the polarized separated plate to change the state having many linearly polarized light components, and obtaining the light which is liable to transmit the polarizer. Accordingly, the 1/4 wavelength plate which is preferably used is a plate which can form many linearly polarized light corresponding to the retardation of the 1/4 wave length from the circularly polarized light projected from the polarized separated plate, has the light of other wavelength of the long diameter in the direction as parallel as that of the above-described linearly polarized light, and can convert the flat elliptically polarized light near the linearly polarized light as near as possible.

By using the above-described 1/4 wavelength plate, the plate is disposed such that the linearly polarized light direction of the projected light thereof and the long diameter direction of the elliptically polarized light become in parallel with the transmission axis as parallel as possible, whereby the light in the state having many linearly polarized light components capable of transmitting the polarizer can be obtained.

The 1/4 wavelength plate can be formed by a proper material, and a material which is transparent and gives a uniform retardation is preferably used. The retardation of the 1/4 wavelength plate can be properly determined according to the wavelength region of the circularly polarized light projected from the polarized separated plate. For example, in a visible light region, the 1/4 wavelength plate to the light having a wavelength of 550 nm is preferred.

Also, the retardation layer may be colored according to the viewing angle, and from the point of preventing the coloring, the 1/4 wavelength plate comprising a refractive index ellipsoid satisfying $N_z \leq 1.1$ wherein $N_z$ is defined by the formula: $N_z = (n_x - n_z)/(n_x - n_y)$ is preferably used. In addition, in the above-described formula, $n_x$ is the maximum refractive index in the face of the retardation layer, $n_y$ is the refractive index in the direction perpendicularly crossing the $n_x$ direction, and $n_z$ is the refractive index in the thickness direction.

The 1/4 wavelength plate can be obtained as a 1/4 wavelength plate comprising a retardation layer of a single layer or a 1/4 wavelength plate of multilayer of two or more retardation layers 51, 52 each having a different retardation for the purpose of expanding the wavelength range capable of functioning as the 1/4 wavelength plate as shown in Fig. 2. For example, the multilayer-type 1/4 wavelength plate capable of functioning as the 1/4 wavelength plate in a wide range of the visible light region is, for example, the multilayers of plural retardation layers by the combination of the retardation layer giving the retardation of the 1/2 wavelength to the light having a wavelength of 550 nm and the retardation layer giving the retardation of the 1/4 wavelength in the state of crossing these optical axes.

In the above-described case, from the point of obtaining the multilayer-type 1/4 wavelength plate preventing coloring by a viewing angle, it is preferred to form a multilayer plate using the retardation layer giving the retardation of the 1/4 wavelength satisfying $N_z \leq 1.1$ described above and 1 layer or 2 more layers of the retardation layer giving the retardation of 1/2 wavelength.

As described above, the 1/4 wavelength plate is obtained as a single layer plate or a multilayer plate of the retardation layer(s) and for the formation of the retardation layer, for example, a retardation film, etc., is used. The retardation film can be obtained as a film obtained by properly applying a stretching treatment to a high molecular weight film by a uniaxial, a diaxial, etc., or as a liquid crystal polymer film. Appropriate films can be used as the high molecular weight film and the liquid crystal polymer film.

Examples of the high molecular weight polymer include films of proper transparent plastics such as polycarbonate, polyester, polysulfone, polyether sulfone, polyvinyl alcohol, polystyrene, polymethyl methacrylate, a polyolefin (e.g., polypropylene, etc.), a cellulose acetate polymer, polyvinyl chloride, polyarylate, and polyamide.

The backlight system in the transmission-type liquid crystal display of the present invention can be formed according to a conventional manner. In particular, in the case of the liquid crystal display having disposed therein the polarized separated plate, a side light-type backlight wherein the light source 41 is disposed at the side surface of the light pipe 4 as shown in Fig. 2 is preferably used. That is, the polarized separated plate aims at the prevention of the reflection loss by converting the reflected light by the polarized separated plate to polarized light to reutilize as projected light and the improvement of the light utilization efficiency by converting the projected light to the state richly containing the linearly polarized light components having a polarizer permeability, if necessary, by phase-controlling via the 1/4 wavelength plate, whereby the absorption loss by the polarizer is prevented as described above. However, because the above-described purpose is easy even when the area of the polarized separated plate is large, the polarized separated plate can be preferably used by the combination with a proper plane light source such as a sidelight-type backlight.

As the light pipe, a proper light pipe having a reflection layer 42 at the bottom surface such that light is projected to the upper surface side as shown in Fig. 2 can be used. The light pipe efficiently projecting light without the absorption of the light is preferably used. An example thereof is the light pipe known in the liquid crystal display wherein a linear light source such as a (cold or hot) cathode-ray tube, etc., or a light source such as a light emitting diode, etc., is disposed at the side surface of the light pipe and the light conducted through the inside of the light pipe is projected to the one surface side of the plate by diffusion, reflection, diffraction, interference, etc.

The light pipe of projecting the light conducted in the side thereof to the one surface side can be obtained as, for example, a light pipe comprising a transparent or translucent resin plate having formed at the light-projecting surface or the bottom surface thereof diffusion materials in a dot form or a stripe form, or a light pipe comprising a resin plate the bottom surface of which is applied with an uneven structure, or particularly a fine prism-form arrangement structure.

The light pipe projecting light to the one surface side can have a function of converting the light reflected by the polarized separated plate to polarized light by itself, but by forming the reflecting plate 42 at the bottom surface of the light pipe, the reflection loss can be almost completely prevented. The reflection layer such as a diffused reflection layer or a mirror plane reflection layer is excellent in the function of converting the light reflected by the polarized light, separating plate to a polarized light, and is preferably used in the present invention.

For example, the diffused reflection layer typified by an uneven surface forms a dissolution state of polarized light by randomly mixing a polarized state based on the diffusion. Also, when a polarized light is reflected by a mirror plane reflection layer such as a vapor-deposited layer of aluminum or silver, a resin plate having formed the vapor-deposited layer, or a metal surface such as a metal foil, the polarized state is inverted.

In forming the light pipe, if necessary, by disposing 1 layer or 2 or more layers of auxiliary means such as a prism sheet for controlling the projection direction of light, a diffusion plate for obtaining an uniformly emitted light, a reflection means for returning the leaked light, light source holder for introducing the projected light from a linear light source to the side surface of the light pipe, etc., at definite positions, a properly combined material is formed. In addition, the dots, etc., applied to the prism sheet, the diffusion plate or the light pipe disposed at the upper surface side (light protecting side) of the light pipe can function as a polarized light conversion means for changing the phase of the reflected light by the diffusion effect, etc.

The transmission type liquid crystal display is generally formed by properly combining the polarizer, the crystal cell, the backlight, and if necessary, other constituent parts such as the polarized separated plate, the 1/4 wavelength plate, the prism sheet, the diffusion plate, the retardation plate for compensation, etc., and incorporating therein driving circuits. In the present invention, there are no particular limitations except that the uneven diffusion layer is formed between the liquid crystal cell and the polarizer, and the liquid crystal display can be formed according to conventional manners.

The liquid crystal display of the present invention can be formed by constructing the constituent parts in the definite disposition state. There are no particular restrictions on the constructing order, etc., and for example, a proper system, such as a system of constructing by constituent part units or a system of constituting previously laminated plural constituent parts as the units, can be adapted.

Also, the constituent parts of forming the liquid crystal display of the present invention may be simply piled up in a state of easily separated or may be adhered in a body via adhesive layers. When the disposition angle of the optical axis becomes a problem, such as a polarized light axis, it is preferred that the parts are adhered in a body for preventing the occurrence of a discrepancy, etc. Even when the constituent part such as the polarized separated plate, the 1/4 wavelength plate, the light pipe, etc., is formed by plural separated elements, the elements can be formed in a previously adhered integrated material. In addition, the formation of the adhered integrated parts via adhesive layers is effective in the points of preventing the reflection loss at each interface, preventing lowering of the display quality by preventing the intrusion of foreign matters in the interfaces.

An appropriate adhesive layer can be used as the adhesive layer. However, from the point of simplicity of the adhesion treatment, a pressure-sensitive adhesive layer is preferred. To form the pressure-sensitive adhesive layer, a pressure-sensitive adhesive using a proper polymer such as an acrylic polymer, a silicone series polymer, a polyester, polyurethane, a polyether or a synthetic rubber can be used. In these polymers, from the points of the optical transparency, the pressure-sensitive adhesive characteristics, the weather resistance, etc., an acrylic pressure-sensitive adhesive can be preferably used.

Also, as the pressure-sensitive adhesive layer, a pressure-sensitive adhesive layer excellent in the stress relaxation property, and in particular, a pressure-sensitive adhesive layer having a relaxation modulus of $2 \times 10^5$ to $1 \times 10^7$ dyn/cm$^2$ and preferably $2 \times 10^6$ to $8 \times 10^6$ dyn/cm$^2$ is preferably used. By forming the adhered integrated parts via the pressure-sensitive adhesive layers excellent in the stress relaxation property, the internal stress caused in the polarizer, the polarized separated plate, the 1/4 wavelength plate, etc., by the heat from the light source can be relaxed, and the occurrence of the change of the refractive index caused by the photoelastic deformation can be prevented. As a result, the formation of the adhered integrated parts is useful for the formation of the liquid crystal display which is bright and is excellent in the viewing property and the reliability of the display quality.

Examples of the acrylic polymer forming the acrylic pressure-sensitive adhesive include polymers prepared by polymerizing one or more kinds of acrylic acid esters and metharylic acid esters having an alkyl group such as methyl, ethyl, n-propyl, isopropyl, n-butyl, isobutyl, pentyl, isoamyl, hexyl, heptyl, cyclohexyl, 2-ethylhexyl, octyl, iso-octyl, nonyl, isononyl, lauryl, dodecyl, decanyl, isodecanyl, etc., and in particular, an alkyl group having from 2 to 14 carbon atoms, if necessary, together with one or more kinds of modifying monomers.

Examples of the modifying monomer include a hydroxy group-containing monomer such as 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, (4-hydroxymethylcyclohexyl)-methylacrylate, etc.; a carboxyl group-containing monomer such as acrylic acid, methacrylic acid, carboxyethyl acrylate, carboxypentyl acrylate, itaconic acid, maleic acid, crotonic acid, etc.; an acid anhydride monomer such as maleic anhydride, itaconic anhydride, etc.; a phosphoric acid containing monomer such as 2-hydroxyethylacryloyl phosphate, etc.

Further, an amide series monomer such as (meth)acrylamide, N-substituted (meth)acrylamide, etc.; a maleimide series monomer such as N-cyclohexylmaleimide, N-isopropylmaleimide, N-laurylmaleimide, N-phenylmaleimide, etc., etc.; an itaconimide series monomer such as N-methylitaconimide, N-ethylitaconimide, N-butylitaconimide, N-octylitaconimide, N-2-ethylhexylitaconimide, N-cyclohexylitaconimide, N-laurylitaconimide, etc.; a succinimide series monomer such as N-(meth)acryloyloxymethylenesuccinimide, N-(meth)acryloyl-6-oxyhexamethylenesuccinimide, N-(meth)acryloyl-8-oxyoctamethylenesuccinimide, etc.; a vinyl series monomer such as vinyl acetate, N-vinylpyrrolidone, N-vinylcarboxylic acid amides, styrene, etc.; divinyl series monomer such as divinylbenzene, etc.; a diacrylate series monomer such as 1,4-butyl diacrylate, 1,6-hexyl diacrylate, etc.; an acrylic acid series monomer such as glycidyl (meth)acrylate, tetra-hydrofurfuryl (meth)acrylate, polyethylene glycol (meth)acrylate, polypropylene glycol (meth)acrylate, fluorine (meth)acrylate, silicone (meth)acrylate, etc.; and a (meth)acrylic acid ester having a different ester group from that of the above-described monomers as the main components, such as methyl (meth)acrylate and octadecyl (meth)acrylate can also be used as the modifying monomers.

Of the above modifying monomers, the monomer which has a functional group capable of reacting with an intermolecular crosslinking agent and can contribute to the intermolecular crosslinking of an acrylic copolymer, such as the carboxyl group-containing monomers, the acid anhydride monomers, glycidyl (meth)acrylate, the hydroxy group-containing monomers, etc., described above can be preferably used. In particular, because the monomers enriched in the crosslinking reactivity, such as carboxyethyl acrylate or 6-hydroxyhexyl (meth)acrylate can impart a necessary cross linking property in a small copolymerized amount, the relaxation modulus of the acrylic copolymer obtained is difficult to be increased. Therefore, these monomers can be particularly preferably used.

The preparation method of the acrylic copolymer is optional, and an appropriate method such as a solution polymerization method, an emulsion polymerization method, a bulk polymerization method or a suspension polymerization method can be used. In the polymerization, a polyfunctional monomer such as hexanediol di(meth)acrylate, (poly)ethylene glycol di(meth)acrylate, (poly)propylene glycol di(meth)acrylate, neopentyl glycol di(meth)acrylate, trimethylolpropane (meth)acrylate, pentaerythritol di(meth)acrylate, trimethylolpropane tri(meth)acrylate, pentaerythritol tri(meth)acrylate, dipentaerythritol hexa(meth)acrylate, epoxy acrylate, polyester acrylate or urethane acrylate can be used.

In the polymerization, if necessary, a polymerization initiator may be used. The amount thereof used can be according to the conventional method and is generally 0.001 to 5% by weight of the monomer component. Examples of the polymerization initiator include organic peroxides such as benzoyl peroxide, t-butyl perbenzoate, cumene hydroperoxide, diisopropyl peroxydicarbonate, di-n-propyl peroxydicarbonate, di(2-ethoxyethyl) peroxydicarbonate, t-butyl peroxyneodecaryate, t-butylperoxypivalate, (3,5,5-trimethylhexanoyl) peroxide, dipropionyl peroxide, and diacetyl peroxide.

Also, azo compounds such as 2,2'-azobisisobutyronitrile, 2,2'-azobis(2-methylbutyronitrile), 1,1'-azobis(cyclohexane-1-carbonitrile), 2,2'-azobis(2,4-dimethylvaleronitrile), 2,2'-azobis(2,4-dimethyl-4-methoxyvaleronitrile), dimethyl 2,2'-azobis(2-methylpropionate), 4,4'-azobis(4-cyanovalericacid), 2,2'-azobis(2-hydroxymethylpropionitrile), 2,2'-azobis[2-(2-imidazolin-2-yl)propane], etc.; potassium persulfate, ammonium persulfate, hydrogen peroxide, etc.; or redox series initiators comprising those peroxides and reducing agents can be used as the polymerization initiator in the present invention.

The acrylic polymer which can be preferably used in the present invention from the point of a moisture and heat resistance has a weight average molecular weight of at least 100,000, preferably at least 200,000, and more preferably at least 400,000. If necessary, such an acrylic polymer can be subjected to a crosslinking treatment with an intermolecular crosslinking agent, etc., to thereby improve the pressure-sensitive adhesive properties by increasing the molecular weight, etc. Examples of the intermolecular crosslinking agent used in the present invention include a polyfunctional isocyanate series crosslinking agent such as tolylene diisocyante, trimethylolpropanetolylene diisocyanate, diphenylmethane triisocyanate, etc.; an epoxy series crosslinking agent such as polyethylene glycol diglycidyl ether, diglycidyl ether, trimethylolpropane triglycidyl ether, etc.; melamine resin series crosslinking agents, metal salt series crosslinking agents, and amino resin series crosslinking agents.

The thickness of the pressure-sensitive adhesive layer may be appropriately determined. In general, the thickness thereof is 1 to 500 $\mu$m, preferably 2 to 200 $\mu$m, and more preferably 5 to 100 $\mu$m, from the points of the adhesive force and decreased thickness of the pressure-sensitive adhesive layer. In addition, if necessary, the pressure-sensitive adhesive layer can be compounded with appropriate additives, for example, tackifiers such as petroleum series resins, rosin series resins, terpene series resins, coumaroneindene series resins, phenol series resins, xylene series resins, alkyd series resins, etc.; softening agents such as phthalic acid esters, phosphoric acid esters, chlorinated paraffin, polybutene, polyisobutylene, etc.; or various kinds of fillers and antioxidants.

The liquid crystal cell in the transmission-type liquid crystal display of the present invention may be formed using an appropriate liquid crystal such as a twist nematic liquid crystal, a super twist nematic liquid crystal, a non-twist series liquid crystal, a guest-host series liquid crystal formed by dispersing a dichroic substance in a liquid crystal, and a ferroelectric liquid crystal, and the driving system, of the liquid crystal may be proper one.

In forming the liquid crystal display, one layer or 2 or more layers of appropriate optical elements such as a prism array layer comprising a prism sheet, etc., a diffusion plate and an antiglare layer formed on the polarizer at the viewing side, an reflection preventing membrane, a protective layer, a protective plate, or a retardation plate for compensation formed between the liquid crystal cell and the polarizer at the viewing side and/or the backlight side, etc., can be disposed at proper positions.

The prism array layer has the purpose to control the projecting direction of light. Accordingly, the prism array layer(s) can be disposed on the upper surface of the plane light source of the light pipe, etc., on the upper surface of the polarized separated plate, the 1/4 wavelength plate, or the polarizer disposed on the plane light source, a viewing back surface side or a viewing side of the liquid crystal cell between the layers, etc., as one layer or 2 more layers. In addition, disposing 2 or more layers, it is preferred that the disposition of the array becomes a crossing state such as perpendicularly crossing by the upper and lower layers from the point of uniforming the projecting direction.

Also, the diffusion plate aims at the homogenization of the luminance and the expansion of the light radiating directions by diffusing light and can be disposed on the surface of the liquid crystal display such as the upper surface of the polarizer, the upper surfaces of the polarized separated plate and the plane light source and at a proper position in the inside thereof as shown in Fig. 2. As the diffusion plate 7, an appropriate plate such as a transparent film having a diffusion structure by an appropriate system such as the fine uneven structure illustrated in the uneven scattering layer of the diffusion structure illustrated in the light pipe can be used, or any conventional diffusion plates can be used. Also, the retardation plate for compensation aims at the prevention of coloring of the display by compensating the birefringent property by the liquid crystal cell, etc., and can be obtained as a stretched film, etc., according to the 1/4 wavelength plate.

In addition, in disposing the 1/4 wavelength plate on the polarized separated plate, the disposed angle of the polarization axis of the polarizer to the fast axis or the slow axis of the 1/4 wavelength plate can be properly determined according to retardation characteristics of the 1/4 wavelength plate and the characteristics of the circularly polarized light entering it. However, from the point of improving the light utilization efficiency, it is preferred that the 1/4 wavelength plate is disposed such that the transmission axis of the polarizer is in as parallel as possible to the polarizing direction of the linearly polarized light via the 1/4 wavelength plate.

Also, in the present invention, by treating the constituent parts of forming the liquid crystal display of the present invention, such as the polarizer, the uneven scattering layer, the polarized separated plate, the 1/4 wavelength plate or other parts such as the light pipe, the retardation plate, the diffusion plate, the pressure-sensitive adhesive layer(s), etc., with a ultraviolet absorbent such as salicylic acid ester series compounds, benzophenol series compounds, benzotriazole series compounds, cyanoacrylate series compounds, and nickel complex salt series compounds, a ultraviolet absorption power can be imparted.

The present invention is described in more detail by reference to the following examples, but it should be understood that the invention is not construed as being limited thereto.

Example 1

A cold cathode ray tube having a diameter of 4 mm was disposed as the side surface of a light pipe of 5 mm in thickness comprised of polymethyl methacrylate having formed at the back surface thereof a reflecting layer comprised of a foamed polyester. After enveloping the side surface of the light pipe and the cold cathode ray tube with an aluminum-deposited film, double layer prism sheets were disposed on the upper surface of the light pipe via a diffusion plate such that dispositions of the arrays were perpendicularly crossed, and a TFT liquid crystal cell and a polarizer (EC1425DU, trade name, manufactured by NITTO DENKO CORPORATION) were disposed thereon via a polarizer having formed thereto an uneven scattering layer to obtain a liquid crystal display.

The polarizer having the uneven scattering layer was the polarizer comprised of a polyvinyl alcohol series polarizing film having formed on both surfaces a transparent protective layer, the uneven scattering layer formed by attaching silica fine particles being formed on the surface of the one transparent protective layer (EG1425AG30, trade name, manufactured by NITTO DENKO CORPORATION). The uneven scattering layer side was disposed as the liquid crystal cell side. The uneven scattering layer had a haze value of 4%, the 60 degree gloss value of 60%, the center line average roughness of the surface unevenness of 0.3 $\mu$m, the 10 points average roughness of 2.8 $\mu$m, and the average peak-valley interval of 120 $\mu$m.

Example 2

A liquid crystal display was obtained in the same manner as in Example 1 except that a polarized separated plate showing a selective reflection property in the wavelength region of 400 to 700 nm and a 1/4 wavelength plate were successively disposed between the polarizer having the uneven scattering layer and the prism sheet and they were adhered in a body by disposing an acrylic pressure-sensitive adhesive layer of 20 $\mu$m in thickness between the layers and press-adhering them.

The polarized separated plate was obtained by obtaining 3 kinds of cholesteric liquid crystal layer-attached films having selective reflection central wavelengths of 450 nm, 550 nm, and 650 nm showing a mirror plane-formed selective reflection state by a method of coating a tetrachloroethane solution of a side-chain-type nematic liquid crystal polymer of a methacryl series main chain added with a chiral agent (CN-32, trade name, manufactured by CHISSO CORPORATION) on the polyimide rubbing treated surface of a triacetyl cellulose film of 50 $\mu$m in thickness by a spin coating method followed by dry-curing at 150°C for 10 minutes to form a cholesteric liquid crystal layer, and then laminating under pressure these films via an acrylic pressure-sensitive adhesive layer of 20 $\mu$m in thickness to integrate them in a body. The central wavelength of the selective reflection was controlled by changing the addition amount of the chiral agent.

The 1/4 wavelength plate was obtained by laminating under pressing a retardation film obtained by uniaxially stretching a polycarbonate film of 100 $\mu$m in thickness to 1.05 times at 160°C, the retardation film giving the retardation of 1/4 wavelength to a light having a wavelength of 550 nm and being cut such that the stretched axis became 17.5 degree, and a retardation film obtained by uniaxially stretching a polycarbonate film of 100 $\mu$m in thickness to 1.09 times at 160°C, the retardation film giving the retardation of 1/2 wavelength to a light having a wavelength of 550 nm and being cut such that the stretched axis became 80 degree, via an acrylic pressure-sensitive adhesive layer of 20 $\mu$m in thickness to integrate in a body.

The acrylic pressure-sensitive adhesive layer was formed by coating an acrylic pressure-sensitive adhesive obtained by placing 99.9 parts by weight of butyl acrylate, 0.1 part by weight of 6-hydroxyhexyl acrylate, and 0.3 part by weight of 2,2-azobisisobutyronitrile in a reaction vessel equipped with a condenser, a nitrogen inlet, a thermometer, and a stirrer together with 120 parts by weight of ethyl acetate followed by heating to 60°C for 4 hours and then to 70°C for 2 hours under a nitrogen gas stream to form a solution, controlling solid component concentration of the solution to 30% by weight by adding thereto 114 parts by weight of ethyl acetate, and adding thereto trimethylolpropanetolylene diisocyanate in an amount of 0.3 part by weight per 100 parts by weight of the solid components, on a polyester film-made separator surface treated with a silicone series releasing agent, and drying at 120°C for 3 minutes. The relaxation elasticity of the acrylic pressure-sensitive adhesive layer thus obtained was $6 \times 10^6$ dyne/cm$^2$.

Comparative Example 1

A liquid crystal display was obtained in the same manner as in Example 1 except that a polarizer having a flat surface without having an uneven scattering layer (EG1425DU, trade name, manufactured by NITTO DENKO CORPORATION) was used in place of the polarizer having the uneven scattering layer.

Comparative Example 2

A liquid crystal display was obtained in the same manner as in Example 2 except that a plate having an uneven scattering layer having a haze value of 28%, a 60 degree gloss value of 19%, the central line average roughness of the surface unevenness of 0.3 $\mu$m, a 10 points average roughness of 4.6 $\mu$m, and an average peak-valley interval of 40 $\mu$m

(EG1425AS1, trade name, manufactured by NITTO DENKO CORPORATION) was used as a polarizer having an uneven scattering layer.

Comparative Example 3

A liquid crystal display was obtained in the manner as in Example 2 except that a polarizer having a flat surface without having an uneven scattering layer (EG1425DU) was used in place of the polarizer having the uneven scattering layer.

Evaluation Test

The luminance and the color temperature (whiteness) at the front (the vertical direction to a screen) at lighting of the backlight in the viewing side of each of the liquid crystal display obtained in the above examples and comparative examples were determined. Also, the presence of sticking which became the display unevenness was determined. The results obtained are shown in the Table below.

TABLE

|  | Example 1 | Example 2 | Comparative Example 1 | Comparative Example 2 | Comparative Example 3 |
|---|---|---|---|---|---|
| Front Luminance (nt) | 98 | 152 | 98 | 145 | 147 |
| Color Temperature (K) | 6,900 | 7,100 | 6,750 | 7,150 | 6,900 |
| Sticking | None | None | None | None | Observed |

While the invention has been described in detail and with reference to specific embodiments thereof, it will be apparent to one skilled in the art that various changes and modifications can be made therein without departing from the spirit and scope thereof.

**Claims**

1.  A liquid crystal display comprising a transmission-type liquid crystal cell having on a light source disposed side thereof a polarizer via an uneven scattering layer having a haze value of 1.5 to 15% and a 60 degree gloss value of 35 to 85%.

2.  The liquid crystal display as claimed in claim 1, wherein said uneven scattering layer has a central line average roughness of the surface of 0.1 to 0.5 $\mu$m, a 10 points average roughness of 1.2 to 4.5 $\mu$m, and an average peak-valley interval of 50 to 200 $\mu$m.

3.  The liquid crystal display as claimed in claim 1 or 2, which further comprises a prism array layer of one layer or 2 or more layers.

4.  The liquid crystal display as claimed in claim 1, 2 or 3, which further comprises a polarized separated plate at the light source disposed side of the liquid crystal cell via the polarizer.

5.  The liquid crystal display as claimed in claim 4, which further comprises a 1/4 wavelength plate at the polarizer side of the polarized separated plate.

6.  The liquid crystal display as claimed in claim 4 or 5, wherein said polarized separated plate comprises one cholesteric liquid crystal layer or 2 or more cholesteric liquid crystal layers each having a different center wavelength of a selective reflection.

7.  The liquid crystal display as claimed in claim 4, wherein said polarized separated plate transmits a linearly polarized light of a definite polarization axis and reflects other lights.

## FIG. 1

## FIG. 2